Europäisches Patentamt

European Patent Office

Office européen des brevets

(19)

(11) Veröffentlichungsnummer : **0 457 895 B1**

(12) **EUROPÄISCHE PATENTSCHRIFT**

(45) Veröffentlichungstag der Patentschrift :
23.03.94 Patentblatt 94/12

(51) Int. Cl.$^5$ : **B01D 53/22**

(21) Anmeldenummer : **91901589.1**

(22) Anmeldetag : **03.12.90**

(86) Internationale Anmeldenummer :
**PCT/EP90/02081**

(87) Internationale Veröffentlichungsnummer :
**WO 91/08825 27.06.91 Gazette 91/14**

(54) **VORRICHTUNG ZUR KONTINUIERLICHEN REINIGUNG DER ABGASE EINER VAKUUMANLAGE.**

(30) Priorität : **09.12.89 CH 4651/89**

(43) Veröffentlichungstag der Anmeldung :
**27.11.91 Patentblatt 91/48**

(45) Bekanntmachung des Hinweises auf die
Patenterteilung :
**23.03.94 Patentblatt 94/12**

(84) Benannte Vertragsstaaten :
**AT BE CH DE DK ES FR GB GR IT LI NL SE**

(56) Entgegenhaltungen :
**EP-A- 0 329 962**

(73) Patentinhaber : **Sihi GmbH & Co KG**
**Lindenstrasse 170**
**D-25524 Itzehoe (DE)**

(72) Erfinder : **HAUK, Gerhard**
**St. Trudpertstrasse 48**
**D-7812 Bad Krozingen (DE)**

(74) Vertreter : **Glawe, Delfs, Moll & Partner**
**Patentanwälte Postfach 26 01 62**
**D-80058 München (DE)**

EP 0 457 895 B1

Jouve, 18, rue Saint-Denis, 75001 PARIS

## Beschreibung

Viele Prozesse, bei denen schädliche Gase entstehen, werden unter Vakuum durchgeführt. Zur Aufrechterhaltung des Vakuums wird durch eine Vakuumpumpe ein ständiger Stoffstrom in Richtung Atmosphäre erzeugt, der auch die schädlichen Gase enthält. Der Abgasstrom der Vakuumpumpe muß daher gereinigt werden. Dafür sind Kondensations- und Absorptionssysteme im Gebrauch.

Es ist bekannt, zum Reinigen von Gasen Gaspermeationsmembranen zu verwenden. Dies sind dünne Folien, deren Durchgangswiderstand für die aus dem Abgas abzutrennenden schädlichen Gase geringer ist als für das Prozeßgas (bspw. Luft). In einem Membranmodul ist die Gaspermeationsmembran derart angeordnet, daß sie einen Strömungsweg für das Abgas trennt von einem Raum zur Aufnahme der die Membran durchdringenden Gase, die als Permeat bezeichnet werden. Für die Durchführung der Reinigung ist es erforderlich, ein Druckgefälle von der Abgasseite zur Permeatseite des Membranmoduls herzustellen. Es ist bekannt (DE-OS 38 06 107 = EP 0 329 962), dafür eine oder mehrere besondere Pumpen zu verwenden, die zusätzlich zu der Förderpumpe der Anlage eingesetzt werden.

Für Vakuumanlagen hat man die Gaspermeationstechnik nicht angewendet, weil der apparative und betriebliche Aufwand angesichts der bei Vakuum großen zu bewältigenden Volumina zu groß erschien. Dabei wurde aber übersehen, daß die Anwendung bei Vakuumanlagen eine sonst nicht bestehende Möglichkeit bietet, den apparativen und betrieblichen Aufwand zu verringern.

Die erfindungsgemäße Lösung besteht demgemäß darin, daß der Abgasstrom mittels der Vakuumpumpe der Vakuumanlage durch das Membranmodul gedrückt und die Permeatseite des Membranmoduls mit der Saugseite derselben Vakuumpumpe verbunden wird.

Kurz gesprochen, wird die Vakuumpumpe der Vakuumanlage selbst für die Erzeugung der Druckdifferenz eingesetzt, die für den Betrieb des Gaspermeationsmembranmoduls erforderlich ist. Dadurch entfällt der Aufwand für mehrere gesonderte Pumpen. Ferner führt die Erfindung dazu, daß durch die Rückführung des Permeats in den Abgasstrom die Schadstoffe darin angereichert werden, so daß die Schadstoffabtrennung und-/oder -ausschleusung effektiv erfolgen kann. Wenn hier vereinfachend von der Vakuumpumpe oder dem Membranmodul gesprochen wird, so soll dies den Fall einschließen, daß mehrere Vakuumpumpen bzw. Membranmoduln in funktioneller Einheit vorgesehen sind.

Bei der erfindungsgemäßen Vorrichtung wird ein kleiner Teil des Saugvermögens der Vakuumpumpe für den Betrieb des Gaspermeationsmembranmoduls eingesetzt. Dieser Teil kann je nach Schadstoffkonzentration und Art der Membran bspw. 5 - 30 % betragen. Erreicht wird dadurch, daß die Schadstoffe in Form des Permeatstromes mit hoher Beladung zurückgeführt werden. Sie können in beliebiger Weise dem zwischen Vakuumpumpe und Membranmodul gebildeten Gaskreislauf entnommen werden, um vernichtet oder in anderer Weise verarbeitet zu werden. Bspw. kann ständig ein Teil des vom Membranmodul zur Vakuumpumpe zurückgeführten Permeatstroms abgezweigt werden. Es kann auch ein Kondensator in dem Gaskreislauf vorgesehen sein, der die Schadstoffe aus dem Gaskreislauf herauskühlt. Da im Permeatstrom eine sehr hohe Schadstoffkonzentration vorliegt, kann die Kondensation in einem dort angeordneten Kondensator oder in der Vakuumpumpe besonders effizient erfolgen. Insbesondere bei Verwendung einer Vakuumpumpe mit geringer Kondensatverträglichkeit werden die Schadstoffe zweckmäßigerweise aus dem Permeatstrom saugseitig vor Eintritt in die Vakuumpumpe auskondensiert und ausgetragen. Jedoch kann es auch zweckmäßig sein, einen Kondensator im Abgasstrom zwischen der Vakuumpumpe und dem Membranmodul vorzusehen, da auch in diesem Bereich der erfindungsgemäßen Zirkulation des Permeats die Schadstoffkonzentration erhöht ist.

Wenn die Möglichkeit besteht, daß schon beim Anfahren der Vakuumanlage Schadstoffe entstehen, kann es erfindungsgemäß zweckmäßig sein, vor Erzeugung des Unterdrucks in der Vakuumanlage den Unterdruck an der Permeatseite des Membranmoduls mittels der Vakuumpumpe zu erzeugen, damit schon bei dem anschließenden Beginn des Abgasstroms die Schadstoffabtrennung einsetzt. Es kann in diesem Zusammenhang zweckmäßig sein, den Abgasstrom von der Anlage zur Vakuumpumpe mittels eines Drosselventils zu reduzieren, um in dem Reinigungsgaskreislauf die für den Betrieb des Membranmoduls erforderliche Druckdifferenz zu gewährleisten.

Falls damit zu rechnen ist, daß in der Vakuumanlage beträchtliche Druckschwankungen auftreten, kann durch Einbau eines Puffervolumens zwischen der Permeatseite des Membranmoduls und der Vakuumpumpe eine bessere Konstanthaltung der am Membranmodul wirkenden Druckdifferenz erreicht werden. Dies kann auch für die Startphase des Vakuumprozesses günstig sein.

Für die Erfindung kommt es auf die Art des Membranmoduls nicht an. Bspw. können Kapillar-, Wickel- oder Kissenmoduln eingesetzt werden. Als Membranmaterial haben sich Polydimethylsiloxan und Silikon bewährt; jedoch können auch andere Membranmaterialien verwendet werden. Zweckmäßigerweise wird das Membranmodul zusätzlich als Flammensperre ausgebildet.

Die erfindungsgemäße Vorrichtung ist im Prinzip unabhängig von der Art der Vakuumpumpe.

2

Für die Größe des anlagenseitigen Vakuums gilt, daß es für den erfindungsgemäßen Reinigungsbetrieb ausreichen muß. Es sollte unter 300 mbar liegen. Besonders zweckmäßig ist ein permeatseitiger Unterdruck zwischen 20 und 300 mbar, vorzugsweise zwischen 50 und 200 mbar. In diesem Grobvakuumbereich wird die größte spezifische Reinigungseffizienz erreicht, weil bei geringeren permeatseitigen Drücken die Reinigungswirkung weniger ansteigt als der Leistungsbedarf.

Der vereinfachend verwendete Terminus Schadstoffe schließt nicht-schädliche, abzutrennende Stoffe ein.

Die Erfindung wird im folgenden näher unter Bezugnahme auf die Zeichnung erläutert, die drei vorteilhafte Ausführungsbeispiele in Schemadarstellung veranschaulicht.

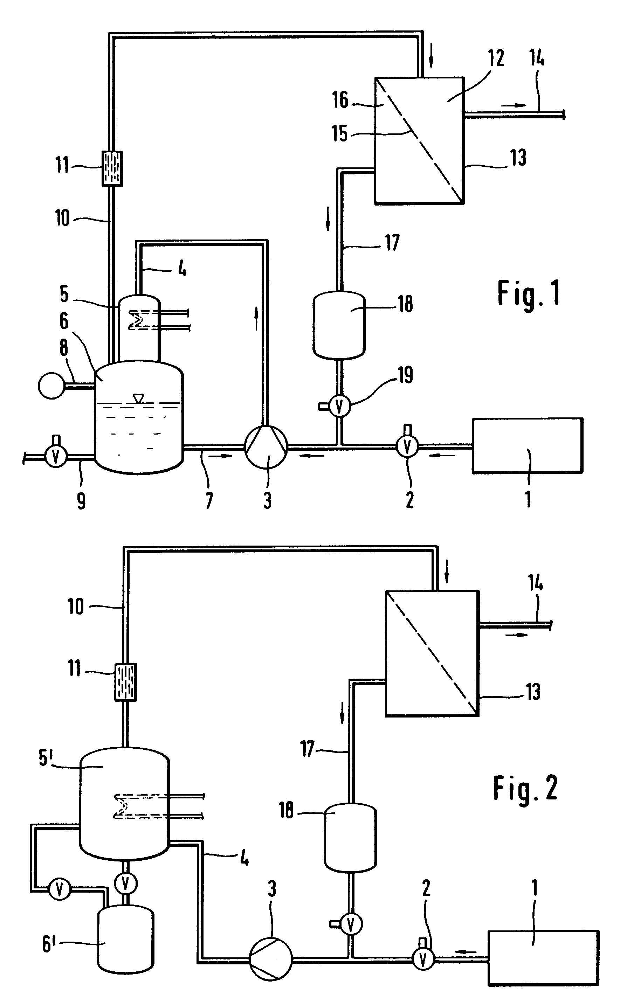

Fig. 1 zeigt das Verfahrensschema für den Fall, daß eine Flüssigkeitsringpumpe, welche mit einem geschlossenen Ringflüssigkeitskreislauf betrieben wird, verwendet wird. Diese Pumpen zeichnen sich durch eine fast unbegrenzte Verträglichkeit bezüglich des im Förderstrom enthaltenen Kondensats aus. Als Betriebsflüssigkeit, die den Flüssigkeitsring der Pumpe bildet, kann das Kondensat dienen.

Aus einem Vakuumprozeßgefäß 1 wird über ein Regelventil 2 durch Vakuumpumpe 3 Gas abgesaugt. Der Abgasstrom der Vakuumpumpe wird über Leitung 4 in einen Kühler geführt, in welchem die kondensierbaren Stoffe dem Abgasstrom entzogen werden. Sie gelangen dann in einen Betriebsflüssigkeitsvorratsbehälter 6, von dem sie ggf. über Leitung 7 als oder mit der Betriebsflüssigkeit der Flüssigkeitsringpumpe 3 wieder zugeführt werden. Die Kühlung kann auch getrennt in je einem Gas- und Flüssigkeitskühler erfolgen. Abhängig von dem mittels Sonde 8 kontrollierten Füllstand im Betriebsflüssigkeitsbehälter 6 wird der Flüssigkeitsüberschuß über Leitung 9 abgezogen.

Nach dem Kühler 5 gelangt der Abgasstrom, der noch mit Schadstoffen beladen ist, über Leitung 10 und Tropfenabscheider 11 durch den Abgasteil 12 des Membranmoduls 13 und wird als gereinigtes Gas über Leitung 14 abgeführt. Die Membran 15 trennt den Abgasraum 12 von dem Permeatraum 16. Während der Druck im Abgasraum 12 nicht wesentlich vom Atmosphärendruck abweicht, wird der Druck im Permeatraum 16 durch das Vakuum auf der Saugseite der Vakuumpumpe 3 bestimmt. Unter dem Einfluß dieser Druckdifferenz diffundieren die Schadstoffe durch die Membran 15 und werden als Permeat durch die Leitung 17 und den Pufferbehälter 18 sowie ein Regelventil 19 zur Saugseite der Pumpe 3 abgeführt. Das Regelventil erlaubt es, auf der Permeatseite einen höheren Druck als in der Anlage 1 einzustellen, wenn das anlagenseitige Vakuum für einen effektiven und leistungsarmen Reinigungsbetrieb zu tief liegen sollte.

Da dem Abgasstrom das Permeat aus Leitung 17 hinzugefügt wird, sind die Schadstoffe bis zum Kondensator 5 hin angereichert, so daß sie dort effizient abgeschieden werden können.

Das Ausführungsbeispiel der Fig. 2 gleicht demjenigen der Fig. 1 mit Ausnahme des Umstands, daß in dem Kondensator 5' und dem Kondensatbehälter 6' anfallendes Kondensat nicht als Betriebsflüssigkeit zur Pumpe 3 zurückgeführt wird. Dies ist dann der Fall, wenn eine Pumpe verwendet wird, in der keine Kondensation stattfindet und/oder eine vom Kondensat gesondert zu haltende Betriebsflüssigkeit, bspw. Öl als Schmiermittel, benutzt wird, oder keine Betriebsflüssigkeit verwendet wird.

Dazu gehören bspw. umlauf- und frischölgeschmierte oder trockenlaufende Drehschieber- und Wälzkolbenpumpen.

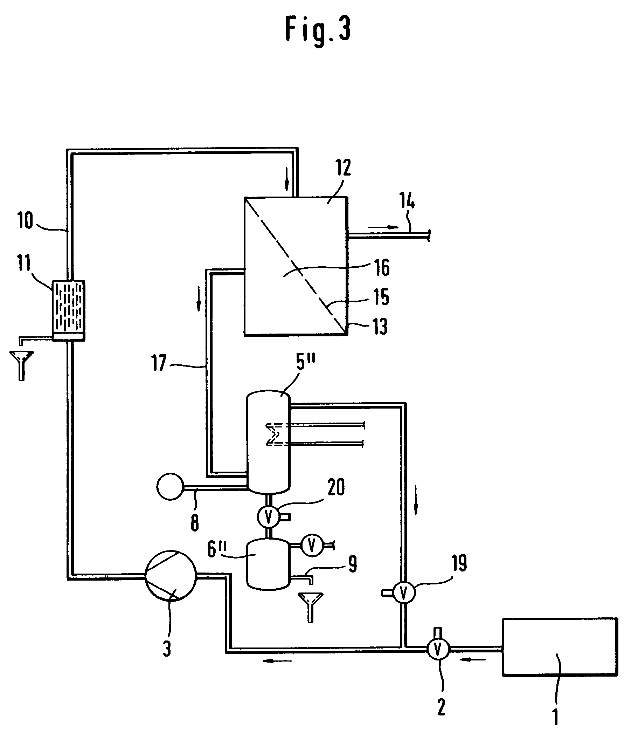

Während bei den zuvor erläuterten Beispielen der Kondensator im Abgasstrom zwischen Pumpe und Membranmodul angeordnet ist, ist er in dem Ausführungsbeispiel der Fig. 3 im Permeatstrom zwischen Membranmodul und Pumpensaugseite vorgesehen. Da der größte Teil des Schadstoffanteils des hochschadstoffangereicherten Permeatstroms in dem Tieftemperaturkondensator 5" kondensiert und daher nicht in die Vakuumpumpe 3 gelangt, ist diese Bauart für Vakuumpumpen geringer Kondensatverträglichkeit geeignet. Das Kondensat wird aus dem Kondensator 5" über eine Druckschleuse 20 ausgetragen.

In dem Kondensator 5" kann trotz des dort vorliegenden Vakuums besonders effizient kondensiert werden, weil einerseits eine hohe Schadstoffbeladung vorliegt und andererseits eine sehr tiefe Kondensationstemperatur aufgrund des geringen Wasserdampfanteils eingestellt werden kann. Der geringe Wasserdampfanteil im Permeatstrom kommt durch die niedrige Permeabilität der Membran für Wasserdampf zustande.

Diese Anlagenvariante kommt insbesondere bei jenen Vakuumpumpentypen zum Einsatz, in denen der Verdichtungsvorgang durch Kondensat gestört würde. Dies ist insbesondere beim Membran-, Hubkolben- und einigen Drehschiebervakuumpumpentypen von Relevanz. Grundsätzlich ist jedoch die Ausführung gemäß Abb. 3 für alle Vakuumpumpentypen, sowie für Pumpen mit Gasballastregelung einsetzbar.

Beispiel:

Eine Vorrichtung in der Ausführung gemäß Fig. 1 wurde mit einer Flüssigkeitsringpumpe mit einer Nennsaugleistung von 32 m³/h betrieben. Aus dem Vakuumdestillationsprozeß wurde hauptsächlich Isopropylacetat abgesaugt, welches auch als Betriebsflüssigkeit (Ringflüssigkeit) in der Pumpe diente. Es wurde ein Kapillarmembranmodul mit einer effektiven Trennfläche von 1 m² eingesetzt. Es konnte eine ausgezeichnete Abgasreinigung erzielt werden. Die folgende Tabelle zeigt die wichtigsten erreichten Abscheidegrade, sowie die Ein- und Austrittskonzentrationen Ce und Ca in Abhängigkeit vom Betriebsvakuum Pv (permeatseitig) und vom effektiven Abgasstrom Vq. Die Abscheideleistung konnte ohne Beeinträchtigung des Anlagevakuums mit der vorhandenen Vakuumpumpe und dem vorhandenen Kühler erzielt werden.

| Abgasstrom Vq | Konz. Eintritt Ce | Konz. Austritt Ca | Betriebs- vakuum pv | Abscheidegrad |
|---|---|---|---|---|
| $(m^3/h)$ | $(q/m^2)$ | $(q/m^2)$ | (mbar) | (%) |
| 2.02 | 18.30 | 11.97 | 740 | 34.6 |
| 2.48 | 18.30 | 7.04 | 540 | 61.5 |
| 2.60 | 18.30 | 5.28 | 370 | 71.1 |
| 2.72 | 19.36 | 2.11 | 100 | 89.1 |
| 3.81 | 18.30 | 3.52 | 250 | 80.8 |
| 2.02 | 18.30 | 11.09 | 730 | 39.4 |

**Patentansprüche**

1. Vakuumanlage mit einer Vakuumpumpe und einer dieser nachgeschalteten Vorrichtung zur kontinuierlichen Reinigung des Abgasstroms der Vakuumanlage, dadurch gekennzeichnet, daß der Abgasstrom mittels der Vakuumpumpe (3) der Vakuumanlage ohne weitere Fördermittel durch ein Gaspermeationsmembranmodul (13) gedrückt wird und die Permeatseite (16) des Membranmoduls mit der Saugseite derselben Vakuumpumpe (3) verbunden ist.

2. Anlage nach Anspruch 1, dadurch gekennzeichnet, daß vor Erzeugung des Unterdrucks in der Vakuumanlage (1) der Unterdruck an der Permeatseite (16) des Membranmoduls (13) mittels der Vakuumpumpe erzeugbar ist.

3. Anlage nach Anspruch 1 oder 2 dadurch gekennzeichnet, daß zur zumindest teilweisen Kondensation des schadstoffangereicherten Gemisches aus Permeat und Abgas ein Kondensator (5) vorgesehen und/oder die Vakuumpumpe (3) als Kondensator ausgebildet ist.

4. Anlage nach einem der Ansprüche 1 bis 3, dadurch gekennzeichnet, daß im Permeatstrom vor dem Eintritt in die Vakuumpumpe (3) ein Vorkondensator (5") vorgesehen ist.

5. Anlage nach einem der Ansprüche 1 bis 4, dadurch gekennzeichnet, daß das Membranmodul (13) zusätzlich als Flammensperre ausgebildet ist.

6. Anlage nach einem der Ansprüche 1 bis 5, dadurch gekennzeichnet, daß zwischen der Permeatseite (16) des Membranmoduls (13) und der Vakuumpumpe (3) im Permeatstrom ein Vakuumpuffertank (18) angeordnet ist.

7. Anlage nach einem der Ansprüche 1 bis 6, dadurch gekennzeichnet, daß der permeatseitige Unterdruck zwischen 20 und 300 mbar liegt.

8. Anlage nach einem der Ansprüche 1 bis 7, dadurch gekennzeichnet, daß ein Teil des Permeatstroms dem zwischen Vakuumpumpe (3) und Membranmodul (13) gebildeten Permeatkreislauf entnehmbar ist.

**Claims**

1. A vacuum installation with a vacuum pump and an apparatus connected downstream thereof for the continuous cleaning of the waste-gas flow of the vacuum installation, characterised in that the waste-gas flow is forced by means of the vacuum pump (3) of the vacuum installation without further feed means through a gas-permeable membrane module (13) and the permeate side (16) of the membrane module is connected with the intake side of the same vacuum pump (3).

2. An installation according to Claim 1, characterised in that before creating the underpressure in the vacuum installation (1) the underpressure can be created on the permeate side (16) of the membrane module (13) by means of the vacuum pump.

3. An installation according to Claim 1 or 2, characterised in that a condenser (5) is provided for at least partial condensation of the mixture of permeate and waste gas containing contaminants and/or the vacuum pump (3) is in the form of a condenser.

4. An installation according to any one of Claims 1 to 3, characterised in that a precondenser (5") is provided in the permeate flow upstream of the inlet to the vacuum pump (3).

5. An installation according to any one of Claims 1 to 4, characterised in that the membrane module (13) is additionally in the form of a flame trap.

6. An installation according to any one of Claims 1 to 5, characterised in that a vacuum buffer tank (18) is disposed between the permeate side (16) of the membrane module (13) and the vacuum pump (3) in the permeate flow.

7. An installation according to any one of Claims 1 to 6, characterised in that the underpressure on the permeate side is between 20 and 300 mbar.

8. An installation according to any one of Claims 1 to 7, characterised in that a portion of the permeate flow can be taken from the permeate circuit formed between the vacuum pump (3) and the membrane module (13).

## Revendications

1. Installation travaillant sous vide, comportant une pompe à vide et, en aval de celle-ci, un dispositif pour l'épuration en continu du courant d'effluent gazeux de l'installation, caractérisée en ce que le courant d'effluent gazeux est refoulé au moyen de la pompe à vide (3) de l'installation, sans autre moyen de refoulement, à travers un module à membrane de perméation de gaz (13) et le côté perméat (16) du module à membrane est relié au côté aspiration de la même pompe à vide (3).

2. Installation selon la revendication 1, caractérisée en ce que la dépression du côté perméat (16) du module à membrane (13) peut être créée au moyen de la pompe à vide avant la création de la dépression dans l'installation travaillant sous vide (1).

3. Installation selon la revendication 1 ou 2, caractérisée en ce qu'un condenseur (5) est prévu et/ou la pompe à vide (3) est réalisée sous forme de condenseur, pour la condensation au moins partielle du mélange de perméat et d'effluent gazeux, enrichi en substances nocives.

4. Installation selon l'une quelconque des revendications 1 à 3, caractérisée en ce qu'un précondenseur (5") est prévu dans le courant de perméat, avant l'entrée dans la pompe à vide (3).

5. Installation selon l'une quelconque des revendications 1 à 4, caractérisée en ce que le module à membrane (13) est réalisé en plus sous forme de dispositif anti-retour de flamme.

6. Installation selon l'une quelconque des revendications 1 à 5, caractérisée en ce qu'un réservoir-tampon à vide (18) est disposé dans le courant de perméat entre le côté perméat (16) du module à membrane (13) et la pompe à vide (3).

7. Installation selon l'une quelconque des revendications 1 à 6, caractérisée en ce que la dépression du côté perméat est comprise entre 20 et 300 mbar.

8. Installation selon l'une quelconque des revendications 1 à 7, caractérisée en ce qu'une partie du courant de perméat peut être prélevée sur le circuit de perméat formé entre la pompe à vide (3) et le module à membrane (13).

Fig.1

Fig.2

# Fig.3